# EUROPEAN PATENT APPLICATION

(11) **EP 4 491 353 A1**
(43) Date of publication of application: **15.01.2025**
(21) Application number: 23766863.7
(22) Date of filing: 07.03.2023
(51) Int. Cl.: B25J 13/00, B25J 13/08

(54) **ROBOT CONTROL DEVICE AND ROBOT CONTROL METHOD**

(30) Priority: 08.03.2022 JP 2022035713
(71) Applicant: Kyocera Corporation, Kyoto-shi, Kyoto 612-8501 (JP)
(72) Inventor: NAKAMURA, Masayoshi, Kyoto-shi, Kyoto 612-8501 (JP); SASABE, Akihiro, Kyoto-shi, Kyoto 612-8501 (JP); SHOJI, Haruki, Kyoto-shi, Kyoto 612-8501 (JP); TSUTSUMI, Masafumi, Kyoto-shi, Kyoto 612-8501 (JP); NISHIDA, Atsushi, Kyoto-shi, Kyoto 612-8501 (JP); MINAMIDE, Hayato, Kyoto-shi, Kyoto 612-8501 (JP)
(74) Representative: TBK
(86) International application number: PCT/JP2023/008675
(87) International publication number: WO 2023/171687

(57) **Abstract**

A robot control apparatus includes a controller that controls a robot including a holder. The controller obtains a first image of at least one holding target. The controller selects, from the at least one holding target recognized in the first image, the at least one holding target to be held by the holder as a selected target. The controller determines a holding position on the selected target on a basis of a second image of the selected target. The controller causes the holder to hold the selected target at the determined holding position.

## Description

### CROSS-REFERENCE TO RELATED APPLICATIONS

The present application claims priority to Japanese Patent Application No. 2022-35713 filed in the Japan Patent Office on March 8, 2022, the entire contents of which are incorporated herein by reference.

### TECHNICAL FIELD

The present disclosure relates to a robot control apparatus and a robot control method.

### BACKGROUND OF INVENTION

Methods for appropriately holding an object of any shape with a robot hand are known (e.g., refer to Patent Literature 1).

### CITATION LIST

### PATENT LITERATURE

Patent Literature 1: Japanese Unexamined Patent Application Publication No. 2005-169564

### SUMMARY

In an embodiment of the present disclosure, a robot control apparatus includes a controller that controls a robot including a holder. The controller obtains a first image of at least one holding target. The controller selects, from the at least one holding target recognized in the first image, the at least one holding target to be held by the holder as a selected target. The controller determines a holding position on the selected target on a basis of a second image of the selected target. The controller causes the holder to hold the selected target at the determined holding position.

In an embodiment of the present disclosure, a robot control method includes controlling a robot including a holder. The robot control method includes obtaining a first image of at least one holding target. The robot control method includes selecting, from the at least one holding target recognized in the first image, the at least one holding target to be held by the holder as a selected target. The robot control method includes determining a holding position on the selected target on a basis of a second image of the selected target. The robot control method includes causing the holder to hold the selected target at the determined holding position.

### BRIEF DESCRIPTION OF THE DRAWINGS

FIG. 1 is a schematic diagram illustrating an example of configuration of a robot control system according to an embodiment.
FIG. 2 is a block diagram illustrating an example of the configuration of the robot control system according to an embodiment.
FIG. 3 is a diagram illustrating an example of recognition of a tray in an overhead image.
FIG. 4A illustrates an example of a first image of a tray.
FIG. 4B is a diagram illustrating an example of recognition of holding targets in the first image illustrated in FIG. 4A.
FIG. 5 is a plan view and a side view illustrating an example of a holding target.
FIG. 6 is a diagram illustrating an example of a selected target selected in the first image.
FIG. 7 is a diagram illustrating a normal line direction of a surface included in the holding target.
FIG. 8 illustrates an example of a second image of the holding target captured from the normal line direction.
FIG. 9 is a schematic diagram illustrating an example where different areas are used by a robot to dispose a holding target.
FIG. 10 is a flowchart illustrating a robot control method including an example of a procedure for determining a holding position.
FIG. 11 is a flowchart illustrating the robot control method including an example of a procedure for holding the holding target at a determined holding position and disposing the holding target.

### DESCRIPTION OF EMBODIMENTS

### (Example of Configuration of Robot Control System 100)

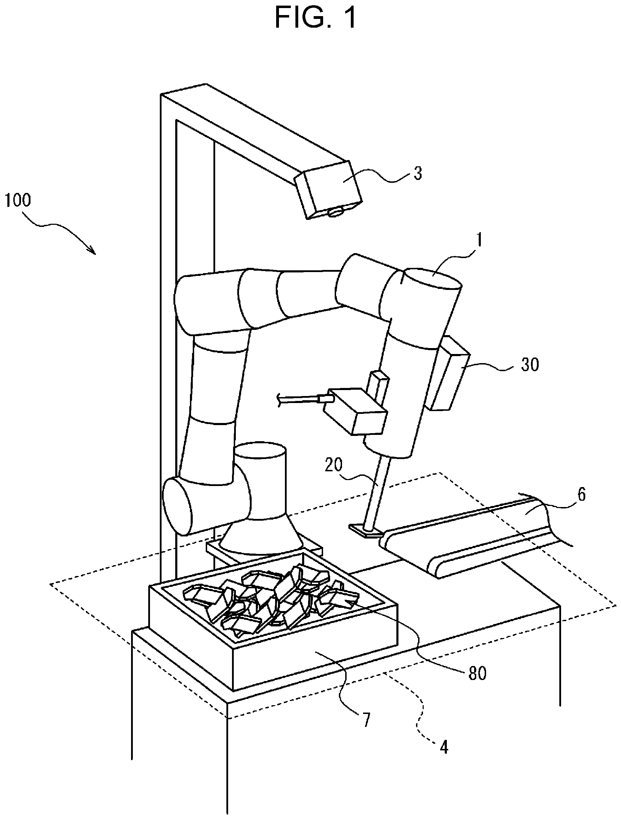

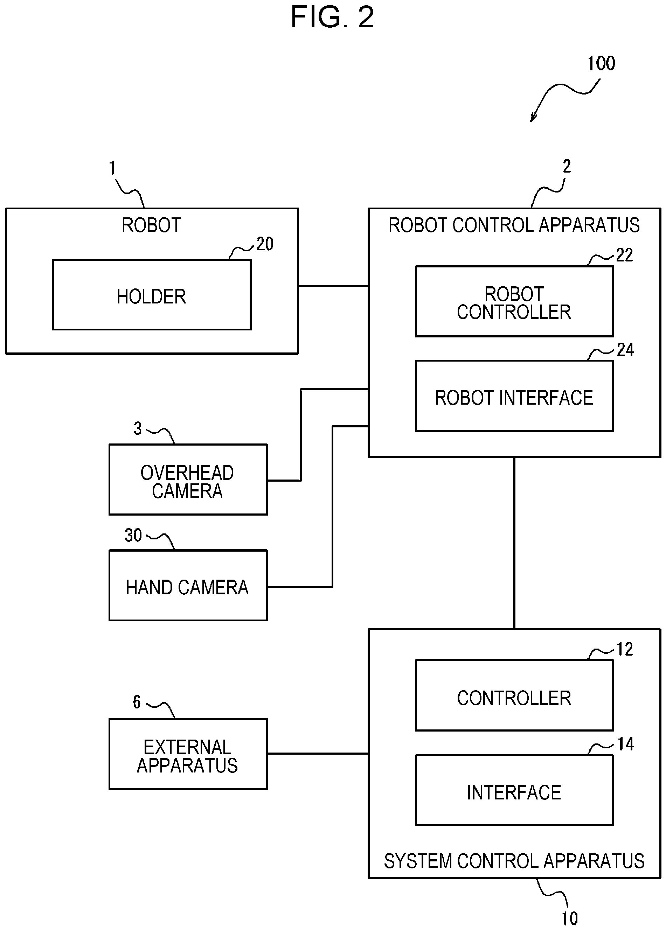

As illustrated in FIGs. 1 and 2, a robot control system 100 according to an embodiment includes a robot 1, a robot control apparatus 2, and a system control apparatus 10. Components of the robot control system 100 may be communicably connected to one another over a network or may be communicably connected to one another without a network. At least one of the components of the robot control system 100 may communicably connected by wire or wirelessly. At least one of the components of the robot control system 100 may be communicably connected over a dedicated link. At least one of the components of the robot control system 100 may be communicably connected to one another in one of various other modes instead of these examples. Each component of the robot control system 100 will be specifically described hereinafter.

### <System Control Apparatus 10>

The system control apparatus 10 includes a controller 12 and an interface 14.

The controller 12 may include at least one processor in order to achieve various functions of the system control apparatus 10. The processor can execute programs for achieving the various functions of the system control apparatus 10. The processor may be achieved as a single integrated circuit. The integrated circuit is also called an IC. The processor may be achieved as a plurality of integrated circuits and discrete circuits communicably connected to one another. The processor may include a CPU (central processing unit). The processor may include a DSP (digital signal processor) or a GPU (graphics processing unit), instead. The processor may be achieved on the basis of one of various other known techniques, instead.

The system control apparatus 10 may also include a storage. The storage may include a magnetic storage medium such as a magnetic disk, or may include a memory such as a semiconductor memory or a magnetic memory. The storage may be implemented as an HDD (hard disk drive) or an SSD (solid-state drive). The storage stores various types of information, programs to be executed by the controller 12, and the like. The storage may function as a work memory of the controller 12. The controller 12 may include at least a part of the storage. At least a part of the storage may be implemented as a storage device separate from the system control apparatus 10.

The interface 14 may include a communication device that is communicable by wire or wirelessly. The communication device may be communicable by a communication method based on one of various communication standards.

The system control apparatus 10 may include one or more servers. The system control apparatus 10 may cause a plurality of servers to perform parallel processing. The system control apparatus 10 need not include a physical housing, and may be based on a virtualization technique such as a virtual machine or a container orchestration system. The system control apparatus 10 may be implemented using a cloud service, instead. When the system control apparatus 10 is implemented using a cloud service, a managed service may be combined. That is, the functions of the system control apparatus 10 may be achieved as cloud services.

The system control apparatus 10 may include at least one server group and at least one database group. The server group functions as the controller 12. The database group functions as the storage. The number of server groups may be one, or two or more. When the number of server groups is one, functions achieved by the one server group include functions achieved by each server group. Different server groups are communicably connected to each other by wire or wirelessly. The number of database groups may be one, or two or more. The number of database groups may be changed as appropriate on the basis of the amount of data managed by the system control apparatus 10 and availability requirements of the system control apparatus 10. The database groups are communicably connected to each server group by wire or wirelessly. The system control apparatus 10 may be connected to an external database. An information processing system including the system control apparatus 10 and an external database may be used, instead.

Although FIGs. 1 and 2 illustrate the system control apparatus 10 as one structure, a plurality of structures may be regarded as one system and operated as necessary, instead. That is, the system control apparatus 10 is a platform whose capacity is variable. By including a plurality of structures in the system control apparatus 10, the system continues to be operated using one of the structures even if another structure becomes unavailable due to a natural disaster or another unforeseeable circumstance. In this case, the plurality of structures is communicably connected to one another by wire or wirelessly. The plurality of structures may be constructed across a cloud service and an on-premise environment.

The system control apparatus 10 is communicably connected to at least one of the components of the robot control system 100 by wire or wirelessly. The system control apparatus 10 and the at least one component of the robot control system 100 include interfaces based on a standard protocol and are capable of bidirectional communication.

The robot control system 100 may include an external apparatus 6. When the robot control system 100 includes the external apparatus 6, the system control apparatus 10, for example, may control the external apparatus 6. In this case, the system control apparatus 10 may include a PLC (programmable logic controller), for example, and control the external apparatus 6 in accordance with operation of a robot 41 in conjunction with the robot control apparatus 2, which will be described hereinafter.

### <Robot Control Apparatus 2>

The robot control apparatus 2 includes a robot controller 22 (also referred to simply as a controller). The robot controller 22 may include at least one processor in order to achieve various functions and various types of control of the robot control apparatus 2. The robot controller 22 is capable of controlling at least one robot 40. The robot controller 22 may be configured in the same or similar manner as the controller 12 of the system control apparatus 10. The robot control apparatus 2 may also include a storage. The storage of the robot control apparatus 2 may be configured in the same or similar manner as the storage of the system control apparatus 10.

The robot control apparatus 2 obtains, from the system control apparatus 10, information for identifying an operation to be performed by the robot 1. The information for identifying an operation to be performed by the robot 1 will also be referred to as operation information. The robot control apparatus 2 operates the robot 1 on the basis of the operation information. As illustrated in FIG. 1, the robot control apparatus 2 may cause the robot 1 to perform an operation for holding a holding target 80 in a tray 7 and moving the holding target 80 to the external apparatus 6. The robot control apparatus 2 may also cause the robot 1 to perform various other operations. The robot control apparatus 2 may or may not be connected to a cloud computing environment. When the robot control apparatus 2 is not connected to a cloud computing environment, operation of the robot control apparatus 2 is completed within an on-premise environment.

The robot control apparatus 2 may include a communication device that obtains operation information from the system control apparatus 10. The communication device of the robot control apparatus 2 may be configured in the same or similar manner as the communication device of the system control apparatus 10. The robot controller 22 of the robot control apparatus 2 can generate information for controlling operation of the robot 1 by executing a control program on the basis of the operation information.

The robot control apparatus 2 may include a robot interface 24. The robot interface 24 may include a communication device that is communicable by wire or wirelessly. The communication device may be communicable by a communication method based on one of various communication standards.

The robot interface 24 may include an input device and an output device. The input device may include, for example, a touch panel, a touch sensor, or a pointing device such as a mouse. The input device may include physical keys. The input device may include an audio input device such as a microphone. The input device is not limited to these examples, and may include one of various other devices, instead.

The output device may include a display device. The display device may include, for example, a liquid crystal display (LCD), an organic EL (electro-luminescence) display, an inorganic EL display, a plasma display panel (PDP), or the like. The display device is not limited to these displays, and may include a display of one of various other methods, instead. The display device may include a light emission device such as an LED (light-emitting diode). The display device may include one of various other devices, instead. The output device may include an audio output device, such as a speaker, that outputs auditory information, such as a voice. The output device is not limited to these examples, and may include a device of one of various other devices, instead.

In the configuration illustrated in FIG. 1, one robot control apparatus 2 is connected to one robot 1. One robot control apparatus 2 may be connected to two or more robots 1, instead. One robot control apparatus 2 may control only one robot 1, or two or more robots 1. The number of robot control apparatuses 2 and robots 1 is not limited to two, and may be one, or three or more, instead.

### <Robot 1>

The robot 1 may include an arm including joints and links. The arm may be, for example, a six-axis or seven-axis vertical articulated robot. The arm may be a three-axis or four-axis horizontal articulated robot or SCARA robot, instead. The arm may be a two-axis or three-axis Cartesian robot, instead. The arm may be a parallel link robot or the like, instead. The number of axes of the arm is not limited to those described above.

The robot 1 includes a holder 20 attached to a tip of the arm or at a certain position. The holder 20 may include a suction hand capable of sucking on a holding target 80. The suction hand may include one or more suckers. The holder 20 may include a holding hand capable of holding a holding target 80. The holding hand may include a plurality of fingers. The number of fingers of the holding hand may be two or more. The fingers of the holding hand may each include one or more joints. The holder 20 may include a scooping hand capable of scooping a holding target 80.

The robot 1 can control a position and an attitude of the holder 20 by moving the arm. The attitude of the holder 20 may be represented by an angle that identifies a direction in which the holder 20 acts on a holding target 80. The attitude of the holder 20 may be represented in a one of various modes other than an angle, such as a spatial vector. The direction in which the holder 20 acts on a holding target 80 may be, for example, a direction in which the holder 20 approaches the holding target 80 when sucking on the holding target 80 to hold the holding target 80 or a direction of the suction. The direction in which the holder 20 acts on a holding target 80 may be a direction in which the holder 20 approaches the holding target 80 when holding the holding target 80 with the plurality of fingers or a direction of the holding. The direction in which the holder 20 acts on the holding target 80 is not limited to these examples, and may be one of various other directions, instead.

The robot 1 may also include a sensor that detects a state of the arm including a state of the joints, the links, or the like or a state of the holder 20. The sensor may detect, as the state of the arm or the holder 20, information regarding an actual position or attitude of the arm or the holder 20 or velocity or acceleration of the arm or the holder 20. The sensor may detect force acting on the arm or the holder 20. The sensor may detect currents flowing to motors driving the joints or torques of the motors, instead. The sensor can detect information obtained as a result of an actual operation of the robot 1. The robot control apparatus 2 can grasp a result of an actual operation of the robot 1 by obtaining a result of detection performed by the sensor.

### <Hand Camera 30>

The robot control system 100 also includes a hand camera 30 attached to the tip of the arm of the robot 1 or a certain position. The hand camera 30 may be capable of capturing an RGB image or obtaining depth data. The robot 1 can control a position and an attitude of the hand camera 30 by moving the arm thereof. The attitude of the hand camera 30 may be represented by an angle that identifies a direction in which the hand camera 30 captures an image. The attitude of the hand camera 30 may be represented in one of various other modes such as a spatial vector, instead of an angle. The hand camera 30 outputs an image captured with the position and the attitude determined through movement of the robot 1 to the robot control apparatus 2.

### <Overhead Camera 3>

The robot control system 100 may also include an overhead camera 3. The overhead camera 3 may be capable of capturing an RGB image or obtaining depth data. The overhead camera 3 may be disposed in such a way as to be able to capture an image of an operation range 4 of the robot 1. The overhead camera 3 may be disposed in such a way as to be able to capture an image of a range including at least a part of the operation range 4. The overhead camera 3 may be disposed in such a way as to be able to capture an image of a range including a range in which the tray 7 can be disposed. The overhead camera 3 outputs a captured image to the robot control apparatus 2 as an overhead image. The overhead camera 3 will also be referred to as a first imager. The hand camera 30, on the other hand, will also be referred to as a second imager.

### <External Apparatus 6>

The robot control system 100 may also include an external apparatus 6. The system control apparatus 10 may control the external apparatus 6. In this case, the system control apparatus 10 and the robot control apparatus 2 communicate with each other to control the external apparatus 6 and the components under the control of the robot control apparatus 2 in a coordinated manner. The external apparatus 6 includes a conveying apparatus. The conveying apparatus is a belt conveyor in FIG. 1.

The robot control system 100 may also include a turning apparatus as the external apparatus 6. When the robot 1 picks up a part upside down, the turning apparatus can turn over the part. The conveying apparatus may include a device for turning over a part. The turning apparatus may be capable of feeding a turned over part to the conveying apparatus or let the robot 1 pick up a turned over part.

### (Example of Operation of Robot Control System 100)

The robot control system 100 according to the present embodiment picks and places parts stacked in bulk. That is, the robot control apparatus 2 causes the robot 1 to pick up parts stacked in bulk and dispose the parts at a certain position. The robot control apparatus 2 may detect an attitude of a part at a time when the robot 1 picks up the part. The robot control apparatus 2 causes the robot 1 to pick and place the part on the basis of a result of the detection of the attitude of the part.

The robot control apparatus 2 may determine, on the basis of the attitude of the part, an area where the part is to be disposed and/or how to dispose the part in the picking and placing. For example, the robot control apparatus 2 may control the robot 1 such that the attitude of the part (front and back or a rotational direction) when the part is disposed at the certain position matches a certain attitude in order to perform machine tending (loading of a workpiece into another apparatus and unloading of a workpiece from another apparatus).

For example, the robot control apparatus 2 may dispose a part in a different attitude between when the robot 1 has picked up the part right-side up and when the robot 1 has picked up the part upside down. More specifically, when the robot 1 has picked up a part right-side up, the robot control apparatus 2 may dispose the part in a first pattern. When the robot 1 has picked up a part upside down, the robot control apparatus 2 may dispose the part in a second pattern. The second pattern may be set such that an orientation or an attitude of a part disposed in the second pattern matches, when the external apparatus 6 turns over the part, that of a part disposed in the first pattern.

In order to sort parts in accordance with whether the parts are right-side up or upside down, for example, the robot control apparatus 2 may dispose each part at a different position depending on whether the robot 1 has picked up the part right-side up or upside down. When the robot control system 100 includes a turning apparatus, the robot control apparatus 2 may cause the robot 1 to feed a part that the robot 1 has picked up upside down to the turning apparatus and pick up again the part turned over by the turning apparatus. The robot control apparatus 2 may cause the robot 1 to dispose a part that the robot 1 has picked up right-side up at the certain position as is.

The robot control apparatus 2 may detect a position and an attitude of the tray 7 storing parts stacked in bulk and control the robot 1 on the basis of the position and the attitude of the tray 7. That is, in the robot control system 100, the tray 7 storing parts stacked in bulk need not necessarily be positioned.

In the robot control system 100 according to the present embodiment, the robot control apparatus 2 may estimate, from an image of parts stacked in bulk, attitudes of the parts without three-dimensional matching. Accuracy of estimating an attitude of a part in the present embodiment can be higher than that at a time when a technique for estimating an attitude of a part using deep learning such as PoseCNN (convolution neural network) is employed.

The robot control system 100 according to the present embodiment can be applied, for example, to picking and placing of parts whose stable attitudes are relatively stable. The parts whose stable attitudes are relatively stable include, for example, parts with a large flat surface, that is, flat parts, which can be clearly distinguished in terms of whether the parts are right-side up or upside down. When the robot control apparatus 2 causes the robot 1 to pick and place parts whose stable attitudes are relatively stable, the robot control apparatus 2 can improve operation accuracy by decoupling tasks. When the robot control apparatus 2 causes the robot 1 to pick and place flat parts, the robot control apparatus 2 can determine attitudes of the flat parts by rotating the parts about normal lines of the parts.

The system control apparatus 10 outputs operation information to the robot control apparatus 2 to cause the robot 1 to perform an operation for holding the holding targets 80 in the tray 7 with the holder 20 and moving the holding targets 80 to the external apparatus 6. A specific example of the operation of the robot control apparatus 2 will be described hereinafter.

### <Obtaining Overview Image>

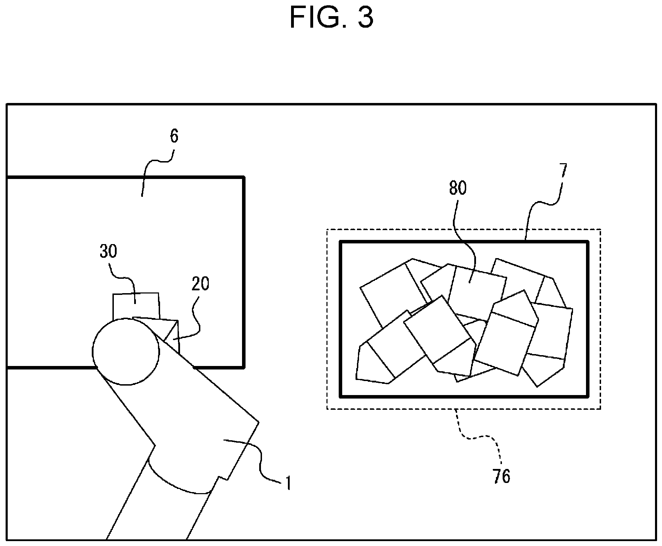

In the robot control system 100, the overhead camera 3 may capture an image of a range including the operation range 4 of the robot 1 and output the image as an overhead image. The robot controller 22 of the robot control apparatus 2 may obtain the overhead image and detect a tray 7 in the overhead image. The robot controller 22 may detect a position and an attitude of the tray 7 by detecting feature points of the tray 7. FIG. 3 illustrates an example of an overhead image. The overhead image shows the tray 7. The robot controller 22 may detect the tray 7 as indicated by a recognition box 76. The recognition box 76 is generated in such a way as to surround the detected tray 7. A shape of the recognition box 76 is not limited to a rectangle, and may be another polygon or any figure including a curve, instead.

The overhead image shows the holding targets 80 stored in the tray 7 in bulk. The overhead image shows the robot 1 including the holder 20 and the hand camera 30. The overhead image shows the external apparatus 6, to which the robot 1 moves the holding targets 80.

The robot controller 22 may display the overhead image using the robot interface 24. The robot controller 22 may display an image obtained by superimposing the recognition box 76 upon the overhead image. In doing so, a worker can check a result of the recognition of the tray 7. As a result, convenience of the robot 1 can improve.

### <Capturing Image of Tray 7 with Hand Camera 30>

The robot controller 22 causes the hand camera 30 of the robot 1 to capture an image of the tray 7. The robot controller 22 controls the position and the attitude of the hand camera 30 on the basis of the position and the attitude of the tray 7 such that the tray 7 has a certain size or is oriented in a certain direction in an image of the tray 7 captured by the hand camera 30. The position and the attitude of the hand camera 30 when the hand camera 30 captures an image of the tray 7 in the certain size or the certain orientation will also be referred to as a first position and a first attitude, respectively. More specifically, when the hand camera 30 captures an image of the tray 7 from a certain direction a certain distance away, an image of the tray 7 in the certain size and orientation is captured. The robot controller 22 may set a vertically upward direction of the tray 7 as the certain direction. The robot controller 22 may control the position and the attitude of the hand camera 30 such that the hand camera 30 captures an image of the tray 7 from the certain direction the certain distance away.

When the robot controller 22 obtains an overhead image, the robot controller 22 may detect the position and the attitude of the tray 7 from the overhead image. In this case, the position and the attitude with which the worker disposes the tray 7 need not be determined. That is, the worker may freely dispose the tray 7 within a range of the overhead image. The robot controller 22 may calculate the first position and the first attitude of the hand camera 30 on the basis of the overhead image and control the robot 1 such that the hand camera 30 captures an image of the tray 7 with the first position and the first attitude. When the robot controller 22 does not obtain an overhead image, the robot controller 22 may obtain a position and an attitude of the tray 7 determined in advance as a disposition rule of the tray 7. In this case, the worker is expected to dispose the tray 7 at the certain position in the certain attitude.

### <Selecting Holding Target 80 and Detecting Normal Line>

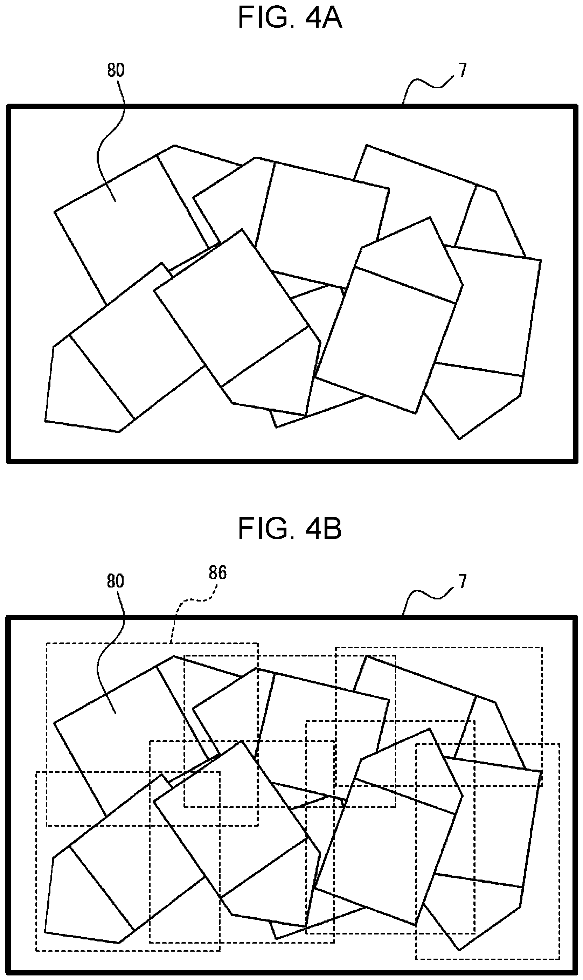

The robot controller 22 obtains an image of the tray 7 at the first position in the first attitude captured by the hand camera 30, that is, an image of the tray 7 captured at a certain angle of view, as a first image. FIG. 4A illustrates an example of the first image. The first image shows the tray 7 and the holding targets 80 stored in the tray 7 in bulk. The robot controller 22 recognizes the holding targets 80 in the first image. As illustrated in FIG. 4B, the robot controller 22 may detect the holding targets 80 in the first image as indicated by recognition boxes 86. That is, the robot controller 22 may generate the recognition boxes 86 as results of recognition of the holding targets 80. The recognition boxes 86 may be displayed such that the recognition boxes 86 surround the corresponding holding targets 80 in the first image. A recognition box 86 may be generated for each of the holding targets 80. A shape of the recognition boxes 86 is not limited to a rectangle, and may be another polygon or any figure including a curve, instead.

The robot controller 22 may detect the holding targets 80 in the first image as indicated by masks. That is, the robot controller 22 may generate masks as results of recognition of the holding targets 80. The masks are displayed in such a way as to cover the holding targets 80 in the first image. The masks may be displayed along contours of the holding targets 80 in the first image. A mask may be generated for each of the holding targets 80.

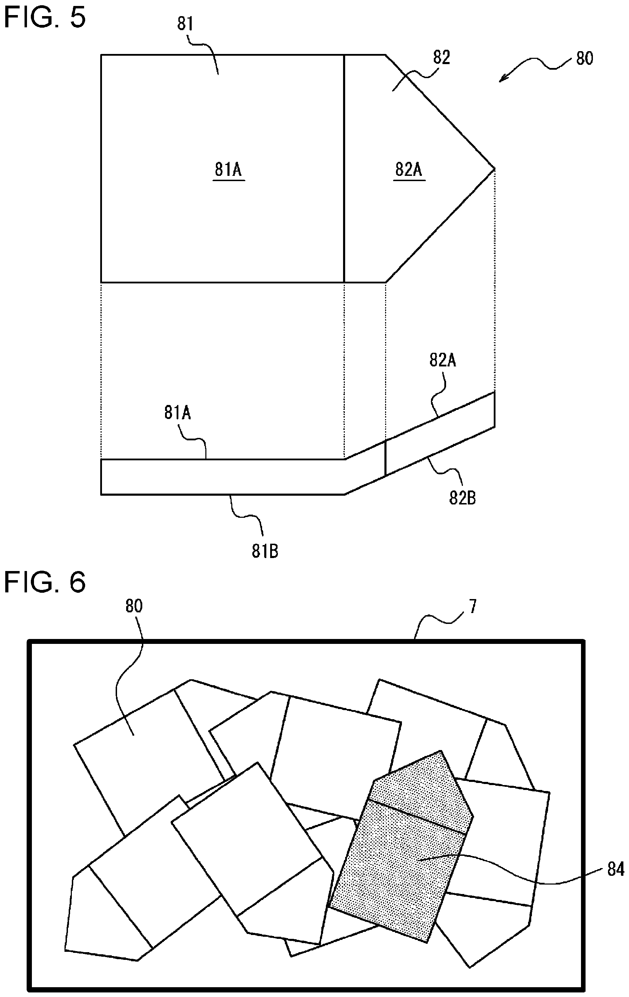

A plan view and a side view of FIG. 5 illustrate an external shape of each holding target 80 in the present embodiment. The holding target 80 is assumed to be dividable into a first part 81 and a second part 82 at a boundary where the holding target 80 bends. The first part 81 includes a front surface 81A and a back surface 81B. The second part 82 includes a front surface 82A and a back surface 82B. A direction in which the second part 82 bends is assumed to be a front surface of the holding target 80.

The robot controller 22 selects, from among the holding targets 80 recognized as illustrated in FIG. 4B, a holding target 80 to be held by the holder 20 next. The selected holding target 80 will also be referred to as a selected target 84. As illustrated in FIG. 6, the robot controller 22 selects one of the holding targets 80 as the selected target 84.

The robot controller 22 may perform, for example, surface estimation for selecting the selected target 84 from the holding targets 80 stored in the tray 7 in bulk. The robot controller 22 may detect, among surfaces of objects shown in the first image, a surface including the largest number of points and select a holding target 80 including the detected surface as the selected target 84. The robot controller 22 may perform surface estimation on the holding targets 80 for each mask. In this case, information that acts as noise can be reduced during the surface estimation, thereby improving accuracy of the surface estimation.

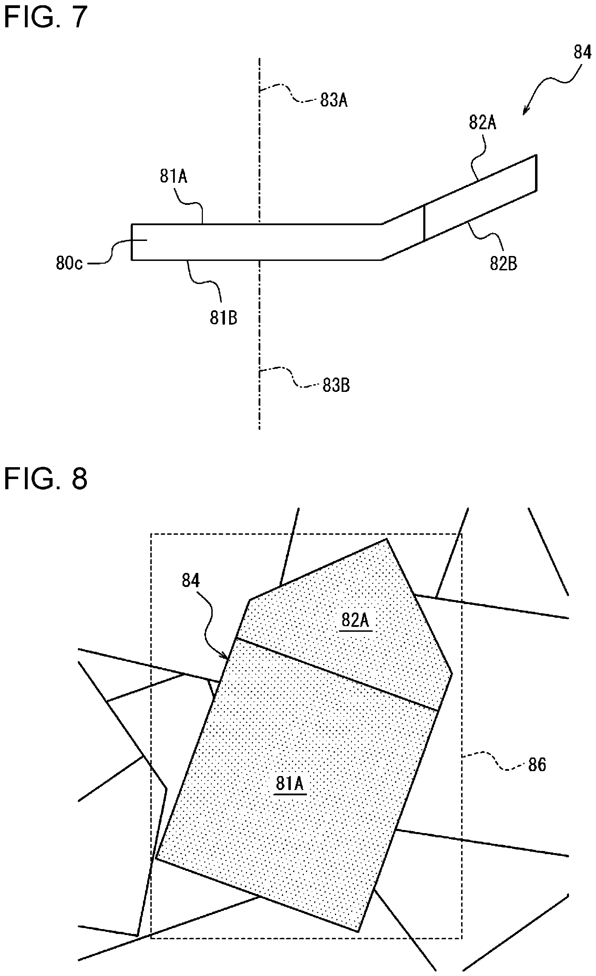

As illustrated in FIG. 7, the robot controller 22 detects a normal line 83A of the front surface 81A or a normal line 83B of the back surface 81B of the first part 81 of the selected target 84. The robot controller 22 may detect a normal line of a surface including the largest number of points among surfaces of the selected target 84 as the normal line 83A or 83B of the selected target 84.

The robot controller 22 need not determine whether the first image shows the front surface or the back surface of the selected target 84. The robot controller 22 may detect the normal line 83A or 83B of the first part 81 of the selected target 84 regardless of whether the front surface or the back surface of the selected target 84 is shown. When the front surface of the selected target 84 is shown, the robot controller 22 detects the normal line 83A of the front surface 81A. When the back surface of the selected target 84 is shown, the robot controller 22 detects the normal line 83B of the back surface 81B. The robot controller 22 may estimate the normal line 83A or 83B through an image analysis of the first image.

### <Capturing Image of, Recognizing, and Detecting State of Holding Target 80 from Normal Line Direction>

The robot controller 22 controls, by controlling the robot 1, the position and the attitude of the hand camera 30 such that the hand camera 30 captures an image of the selected target 84 from a direction of the detected normal line 83A or 83B. The robot controller 22 obtains the image captured by the hand camera 30 from the direction of the detected normal line 83A or 83B as a second image. FIG. 8 illustrates an example of the second image. In FIG. 8, the front surface 81A of the first part 81 and the front surface 82A of the second part 82 on the front surface of the selected target 84 are shown.

The robot controller 22 may recognize, in the second image, the selected target 84 again as indicated in FIG. 8 by a recognition box 86. The robot controller 22 may detect, on the basis of the second image, whether the front surface or the back surface of the selected target 84 is shown. The robot controller 22 may detect a direction of the normal line 83A or 83B of the first part 81 of the selected target 84 on the basis of the second image. The robot controller 22 may detect the direction of the normal line 83A of the front surface 81A when the front surface of the selected target 84 is shown. The robot controller 22 may detect the direction of the normal line 83B of the back surface 81B when the back surface of the selected target 84 is shown. The robot controller 22 may detect a rotational angle about the normal line 83A or 83B of the selected target 84 on the basis of the second image. The robot controller 22 may detect information including the direction of the normal line 83A or 83B of the selected target 84 and the rotational angle about the normal line 83A or 83B as information regarding the attitude of the selected target 84. That is, the attitude of the selected target 84 may be determined from the direction of the normal line 83A or 83B and the rotational angle about the normal line 83A or 83B. The attitude of the selected target 84 may be identified from the direction of the normal line 83A and the rotational angle about the normal line 83A, where the normal line 83A serves as a reference. When the back surface of the selected target 84 is shown, the robot controller 22 may detect the direction of the normal line 83B and determine a direction opposite that of the normal line 83B is the direction of the normal line 83A.

### <Determining Holding Position and Holding Operation>

The robot controller 22 determines a surface of the selected target 84 at which the holder 20 is to hold the selected target 84 on the basis of a result of detection of a state of the selected target 84. The surface at which the holder 20 holds the selected target 84 will also be referred to as a holding surface. When the front surface of the selected target 84 is shown, the robot controller 22 determines the front surface 81A of the first part 81 as the holding surface. When the back surface of the selected target 84 is shown, the robot controller 22 determines the back surface 81B of the first part 81 as the holding surface. The robot controller 22 determines a position on the holding surface at which the holder 20 is to hold the selected target 84. The position at which the holder 20 holds the selected target 84 will also be referred to as a holding position. The robot controller 22 controls the robot 1 such that the holder 20 holds the holding target 80 at the determined holding position.

When the holder 20 holds the selected target 84 and disposes the selected target 84 at the certain position, the robot controller 22 may correct the rotational angle of the selected target 84 about the normal line 83A or 83B. In other words, the robot controller 22 may control the robot 1 in such a way as to adjust the direction of the selected target 84 and dispose the selected target 84 at the certain position. The robot controller 22 may determine, on the basis of the attitude of the selected target 84 in the second image, the amount of correction of the rotational angle about the normal line 83A or 83B at a time when the holder 20 disposes the selected target 84 at the certain position after holding the selected target 84. The robot controller 22 may determine, in consideration of the attitude of the holder 20 at a time when the holder 20 disposes the selected target 84 at the certain position after holding the selected target 84, the attitude of the holder 20 at a time when the holder 20 holds the selected target 84. The robot controller 22 may control the robot 1 such that the holder 20 holds the selected target 84 in the determined attitude.

### <Disposing Holding Target 80>

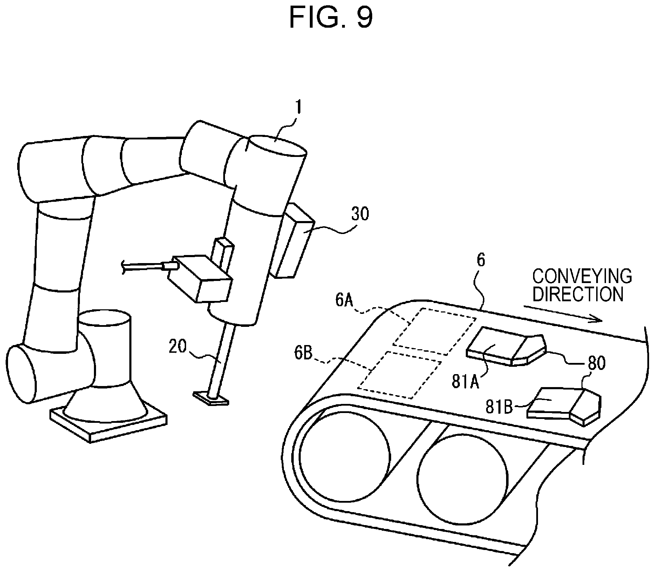

The robot controller 22 controls the robot 1 in such a way as to dispose the holding target 80 at a different position between when the front surface of the holding target 80 selected and held as the selected target 84 is shown and when the back surface of the holding target 80 is shown. As illustrated in FIG. 9, the robot controller 22 may control the robot 1 in such a way as to dispose the holding target 80 in a first area 6A when the front surface of the holding target 80 is shown. The robot controller 22 may control the robot 1 in such a way as to dispose the holding target 80 in a second area 6B when the back surface of the holding target 80 is shown.

In the example illustrated in FIG. 9, the first area 6A and the second area 6B are set as areas on the belt conveyor included in the external apparatus 6. When the external apparatus 6 is implemented as a conveying apparatus, the external apparatus 6 conveys the holding target 80 disposed in the first area 6A or the second area 6B in a conveying direction. After a holding target 80 is conveyed in the conveying direction and the first area 6A and the second area 6B become vacant, the robot controller 22 may dispose a next holding target 80 in the first area 6A or the second area 6B.

The first area 6A or the second area 6B is not limited to an area on the belt conveyer as described above, but may be set on another place, instead. For example, the second area 6B may be set on the turning apparatus included in the external apparatus 6. In doing so, when the back surface of the holding target 80 is shown, the turning apparatus can turn over the holding target 80. As a result, the holding target 80 can be disposed on the external apparatus 6 with the front surface thereof shown. The first area 6A or the second area 6B may be set on a place where a conveying vehicle or a drone is waiting, or may be set on a place where the conveying vehicle picks up the holding target 80.

### <Example of Procedure of Robot Control Method>

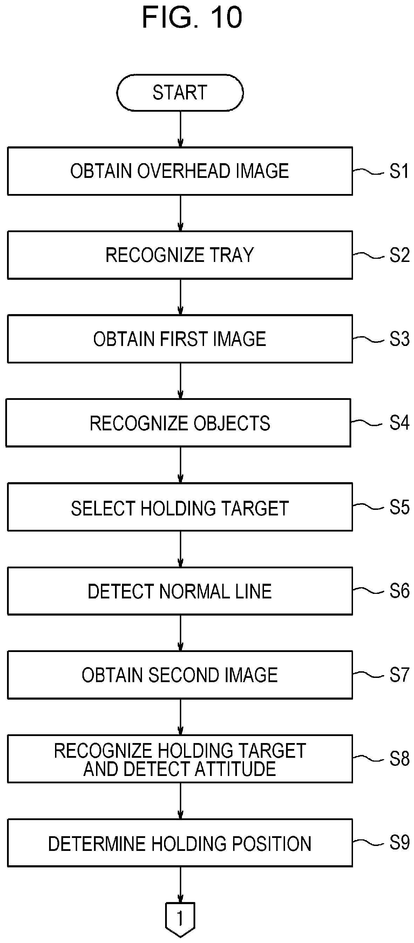

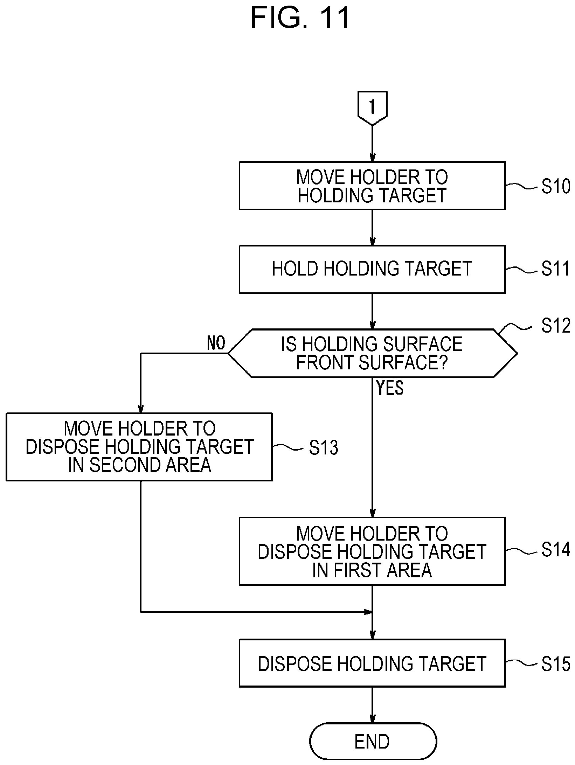

The robot controller 22 of the robot control apparatus 2 may perform a robot control method including a procedure illustrated in flowcharts of FIGs. 10 and 11. The robot control method may be achieved as a robot control program to be executed by a processor included in the robot controller 22 of the robot control apparatus 2. The robot control program may be stored in a non-transitory computer-readable medium.

The robot controller 22 obtains an overhead image from the overhead camera 3 (step S1 in FIG. 10). The robot controller 22 recognizes the tray 7 from the overhead image (step S2). The robot controller 22 moves, on the basis of a result of the recognition of the tray 7, the robot 1 such that the hand camera 30 captures an image of the tray 7, and obtains a first image captured by the hand camera 30 (step S3).

The robot controller 22 recognizes objects stored in the tray 7 in bulk in the first image (step S4). The robot controller 22 selects a holding target 80 to be held by the holder 20 from the recognized objects (step S5). The robot controller 22 detects a normal line direction of the holding target 80 on the basis of an image of the holding target 80 included in the first image (step S6). The robot controller 22 moves the robot 1 such that the hand camera 30 captures an image of the holding target 80 from the normal line direction of the detected holding target 80, and obtains a second image captured by the hand camera 30 (step S7).

The robot controller 22 recognizes the holding target 80 on the basis of the second image and detects an attitude of the holding target 80 (step S8). The robot controller 22 determines, on the basis of a result of the recognition of the holding target 80 and a result of the detection of the attitude of the holding target 80, a position on the holding target 80 at which the holder 20 is to hold the holding target 80 (step S9). As described above, by performing the example of the procedure illustrated in FIG. 10, the robot controller 22 can select the holding target 80 and determine the holding position on the holding target 80.

In order for the holder 20 to hold the holding target 80, the robot controller 22 moves the holder 20 to a position of the holding target 80 (step S10 in FIG. 11). The robot controller 22 causes the holder 20 to hold the holding target 80 (step S11). The robot controller 22 determines whether a holding surface of the holding target 80 is a front surface of the holding target 80 (step S12).

If the holding surface of the holding target 80 is the front surface of the holding target 80 (step S12: YES), the robot controller 22 moves the holder 20 such that the holder 20 disposes the holding target 80 in the first area 6A (step S13). If the holding surface of the holding target 80 is not the front surface of the holding target 80 (step S12: NO), that is, if the holding surface of the holding target 80 is a back surface of the holding target 80, the robot controller 22 moves the holder 20 such that the holder 20 disposes the holding target 80 in the second area 6B (step S14).

After moving the holder 20 in the procedure in step S13 or S14, the robot controller 22 causes the holder 20 to dispose the holding target 80 in the first area 6A or the second area 6B (step S15). After performing the procedure in step S15, the robot controller 22 ends the procedure illustrated in the flowcharts of FIGs. 10 and 11.

### (Summary)

As described above, in the robot control system 100 according to the present embodiment, the robot control apparatus 2 includes the robot controller 22 that controls the robot 1 including the holder 20. The robot controller 22 obtains a first image of holding targets 80 captured by the hand camera 30 and recognizes the holding targets 80 in the first image. The robot controller 22 selects, from among the recognized holding target 80, a holding target 80 to be held by the holder 20 as a selected target 84. The robot controller 22 obtains a second image of the selected target 84 captured by the hand camera 30. The robot controller 22 recognizes the selected target 84 in the second image and determines a holding position on the selected target 84. The robot controller 22 causes the holder 20 to hold the selected target 84 at the determined holding position. In doing so, the holding of the holding target 80 by the holder 20 can be stabilized. As a result, the convenience of the robot 1 can improve.

### (Another Embodiment)

A robot control system 100 according to another embodiment will be described hereinafter.

### <Screening>

The robot controller 22 may screen selection candidates in order to select the selected target 84 from the holding targets 80 stored in the tray 7 in bulk. The robot controller 22 may select the selected target 84 from the holding targets 80 that have remained as the selection candidates through the screening.

The robot controller 22 may generate masks of the holding targets 80 in the first image. The robot controller 22 may select holding targets 80 on the basis of scores. If a score of a generated mask is higher than or equal to a threshold, a corresponding holding target 80 may remain as a selection candidate. If area of a mask is greater than or equal to a threshold, the robot controller 22 may leave a corresponding holding target 80 as a selection candidate. The robot controller 22 may calculate percentage of depth data that is not missing in the mask and, if the percentage is higher than or equal to a threshold, leave the holding target 80 as a selection candidate.

If coordinates of the center of a recognition box 86 generated when a holding target 80 is recognized is located inside the tray 7, the robot controller 22 may leave the holding target 80 as a selection candidate.

### <Selection Based on Scores>

The robot controller 22 may calculate scores of the holding targets 80 in the first image and evaluate holdability on the basis of the scores. The robot controller 22 may then select the selected target 84 on the basis of results of the evaluation. In this case, for example, the selected target 84 may be selected in descending order of the scores. The robot controller 22 may calculate the scores of the holding targets 80 on the basis of depth data. When depth data regarding a holding target 80 includes a point indicating that the holding target 80 is located in an upper part of the tray 7, the robot controller 22 may calculate a high score for the holding target 80. The robot controller 22 may calculate scores for holding targets 80 that have remained through screening.

The robot controller 22 may calculate the scores on the basis of masks. For example, the robot controller 22 may calculate the scores of the holding target 80 on the basis of area of the masks. The robot controller 22 may calculate a higher score as the area of a mask increases. The robot controller 22 may calculate a score on the basis of how accurately a mask reflects a shape of a holding target 80. When a holding target 80 has a hole, for example, a score of the holding target 80 may be calculated on the basis of whether a hole in a mask is correctly shown. When the holding target 80 is sharply tilted, the first image is unlikely to show the hole. If the hole is overlooked, suction force or grasping force acts obliquely when the holder 20 holds the holding target 80, and gravity is hard to overcome. The robot controller 22 may calculate a high score when a hole in a mask is correctly shown.

The robot controller 22 may calculate a high score for a holding target 80 that is not overlapping another holding target 80. The robot controller 22 may calculate accuracy of depth data and then calculate a high score for a holding target 80 whose accuracy is high.

The robot controller 22 may calculate an evaluation score, which reflects the various factors described above, for each holding target 80 and select a holding target 80 whose evaluation score is high as the selected target 84. The robot controller 22 may calculate the evaluation score while weighting scores that reflect the various factors.

Although some embodiments of the robot control system 100 have been described above, embodiments of the present disclosure may also include modes of a method or a program for implementing an apparatus and a storage medium (e.g., an optical disc, a magneto-optical disk, a CD-ROM, a CD-R, a CD-RW, a magnetic tape, a hard disk, a memory card, etc.) storing the program.

Implementation modes of the program are not limited to application programs such as object code compiled by a compiler and program code executed by an interpreter, and may be a mode such as a program module incorporated into an operating system, instead. The program may or may not be configured such that a CPU on a control substrate alone performs all processing. The program may be configured such that another processing unit mounted on an expansion board or an expansion unit attached to the substrate performs part or the entirety of the program as necessary.

Although some embodiments of the present disclosure have been described on the basis of the drawings and the examples, note that those skilled in the art can make various variations or alterations on the basis of the present disclosure. Note, therefore, that the scope of the present disclosure includes these variations or alterations. For example, functions included in each component or the like can be rearranged without causing a logical contradiction, and a plurality of components or the like can be combined together or further divided.

For example, an example where the robot control system 100 includes one robot control apparatus 2 has been described above. The robot control apparatus 2 may be divided, instead. That is, the robot control system 100 may essentially include two robot control apparatuses 2, instead. In this case, each of the two robot control apparatuses 2 performs a different type of control of the robot 1.

Although the robot controller 22 determines the holding position on the selected target 84 on the basis of the second image after selecting the selected target 84 on the basis of the first image in the above description, the robot controller 22 may determine the holding position on the selected target 84 on the basis of the first image, instead. In this case, for example, the robot controller 22 may select the selected target 84 on the basis of the first image and then determine whether to obtain the second image. More specifically, the robot controller 22 may, for example, calculate scores of the holding targets 80 in the first image, select the selected target 84 on the basis of the scores, and determine whether to obtain the second image. For example, the robot controller 22 may evaluate holdability of a holding target 80 and, if the holdability of the holding target 80 determined on the basis of the first image is high, hold the holding target 80 on the basis of the first image without obtaining the second image. The robot controller 22 may evaluate closeness between the direction of the normal line 83A or 83B obtained through an image analysis of the first image and an imaging direction from the camera to the holding target 80 when the first image is obtained and, if the imaging direction and the direction of the normal line 83A or 83B is estimated, on the basis of a certain threshold, to be sufficiently close to each other, hold the holding target 80 on the basis of the first image. The holding of the holding target 80 based on the first image may be performed in the same or similar manner as the holding of the holding target 80 based on the second image. If the robot controller 22 determines that the second image needs to be obtained, the robot controller 22 may hold the holding target 80 on the basis of the second image as described above.

The robot controller 22 may select at least one holding target 80 as the selected target 84 on the basis of the first image and determine whether to capture the second image. If the robot controller 22 determines that the second image need not be captured, the robot controller 22 may determine the holding position on the selected target 84 on the basis of the first image and cause the holder 20 to hold the selected target 84 at the determined holding position.

All of the components described in the present disclosure and/or all of the disclosed methods or all of the steps in the process may be combined in any manner unless corresponding features are mutually exclusive. Each of the features described in the present disclosure can be replaced by an alternative feature that serves for the same, equivalent, or similar purpose, unless explicitly denied. Each of the disclosed features, therefore, is just an example of a comprehensive series of the same or equivalent features, unless explicitly denied.

The embodiments in the present disclosure are not limited to any specific configuration according to one of the above-described embodiments. The embodiments of the present disclosure can be expanded to all the novel features described in the present disclosure or a combination thereof, all the novel methods or the steps in the process described or a combination thereof.

In the present disclosure, terms such as "first" and "second" are identifiers for distinguishing the corresponding components. The components distinguished with the terms such as "first" and "second" in the present disclosure may exchange the numbers thereof. For example, the first voltage pulse may exchange "first" for "second", which are identifiers, with the second voltage pulse. The identifiers are simultaneously exchanged. Even after the exchange of the identifiers, the components are still distinguished from each other. Identifiers may be removed. Components from which identifiers have been removed are distinguished from each other by reference numerals. The identifiers such as "first" and "second" in the present disclosure are not intended to be used as a sole basis for interpretation of order of the components or presence of an identifier with a smaller number.

### REFERENCE SIGNS

100 robot control system
1 robot (4: operation range)
2 robot control apparatus (22: robot controller, 24: robot interface)
3 overhead camera
6 external apparatus (6A: first area, 6B: second area)
7 tray (76: recognition box)
10 system control apparatus (12: controller, 14: interface)
20 holder
30 hand camera
80 holding target
81 first part (81A: front surface, 81B: back surface)
82 second part (82A: front surface, 82B: back surface)
83A normal line of front surface
83B normal line of back surface
84 selected target
86 recognition box

## Claims

1. A robot control apparatus comprising:
a controller that controls a robot including a holder,
wherein the controller obtains a first image of at least one holding target,
wherein the controller selects, from the at least one holding target recognized in the first image, the at least one holding target to be held by the holder as a selected target,
wherein the controller determines a holding position on the selected target on a basis of a second image of the selected target, and
wherein the controller causes the holder to hold the selected target at the determined holding position.

2. The robot control apparatus according to claim 1,
wherein the controller detects a normal line direction of a holding surface of the selected target and determines the holding position on a basis of the second image captured from the detected normal line direction.

3. The robot control apparatus according to claim 1 or 2,
wherein the controller calculates an attitude of the selected target in the second image and determines, on a basis of the attitude, an area where the selected target is to be disposed.

4. The robot control apparatus according to any of claims 1 to 3,
wherein the controller calculates an attitude of the selected target in the second image and determines, on a basis of the attitude, how to dispose the selected target.

5. The robot control apparatus according to claim 4,
wherein the controller disposes the selected target in a first pattern if a front surface of the selected target is shown, and
wherein the controller disposes the selected target in a second pattern if a back surface of the selected target is shown.

6. The robot control apparatus according to claim 5,
wherein the second pattern is set such that an orientation of the selected target disposed in the second pattern matches, when the selected target disposed in the second pattern is turned over, an orientation of the selected target disposed in the first pattern.

7. The robot control apparatus according to claim 3,
wherein, if a front surface of the selected target is shown, the controller controls the robot such that the holder disposes the selected target in a first area, and
wherein, if a back surface of the selected target is shown, the controller controls the robot such that the holder disposes the selected target in a second area.

8. The robot control apparatus according to any of claims 1 to 7,
wherein the controller determines, on a basis of an attitude of the selected target in the second image, an amount of correction in a rotational angle at a time when the holder disposes the selected target after holding the selected target.

9. The robot control apparatus according to any of claims 1 to 8,
wherein the controller obtains, as an overhead image, an image captured by a first imager located in such a way as to capture an image of at least a part of an operation range of the robot,
wherein the controller calculates, on a basis of the overhead image, a first position and a first attitude with which the first image is captured,
wherein the controller controls the robot such that a second imager attached to the robot captures an image with the first position and the first attitude, and
wherein the controller obtains, as the first image, the image captured by the second imager with the first position and the first attitude.

10. The robot control apparatus according to any of claims 1 to 9,
wherein the controller generates a recognition box surrounding the at least one holding target as a result of the recognition of the at least one holding target.

11. The robot control apparatus according to any of claims 1 to 10,
wherein the controller selects the selected target on a basis of a score indicating a result of the recognition of the at least one holding target.

12. The robot control apparatus according to claim 11,
wherein the controller evaluates holdability on a basis of the score and selects the selected target on a basis of a result of the evaluation.

13. The robot control apparatus according to claim 11 or 12,
wherein the controller generates a mask covering each of the at least one holding target in the first image as the result of the recognition of the at least one holding target, and
wherein the controller calculates the score on a basis of the mask.

14. The robot control apparatus according to claim 1,
wherein the controller selects the at least one holding target as the selected target on a basis of the first image and determines whether to capture the second image.

15. The robot control apparatus according to claim 14,
wherein, if determining that the second image need not be captured, the controller determines the holding position on the selected target on a basis of the first image, and
wherein the controller causes the holder to hold the selected target at the determined holding position.

16. A robot control method for controlling a robot including a holder, the robot control method comprising:
obtaining a first image of at least one holding target;
selecting, from the at least one holding target recognized in the first image, the at least one holding target to be held by the holder as a selected target;
determining a holding position on the selected target on a basis of a second image of the selected target; and
causing the holder to hold the selected target at the determined holding position.
